# EUROPEAN PATENT APPLICATION

(11) **EP 4 711 650 A1**
(43) Date of publication of application: **18.03.2026**
(21) Application number: 24200244.2
(22) Date of filing: 13.09.2024
(51) Int. Cl.: F16J 15/34, F16J 15/38, B01F 35/30

(54) **SEAL CARTRIDGE FOR SEALING AN INTERFACE BETWEEN AN OPENING IN A VESSEL AND A ROTARY SHAFT OF AN AGITATOR SYSTEM, AGITATOR SYSTEM, MIXING ARRANGEMENT AND METHODS**

(71) Applicant: Alfa Laval Corporate AB, 221 00 Lund (SE)
(72) Inventor: FØNS, Michael Juhl, DK-8382 HINNERUP (DK); THORØE-BJERRISGAARD, Søren, DK-6580 VAMDRUP (DK)
(74) Representative: Alfa Laval Attorneys

(57) **Abstract**

The present invention relates to a seal cartridge (100) for sealing an interface between an opening (52) in a vessel (50) and a rotary shaft (12) of an agitator system (10). The seal cartridge (100) comprises a cartridge housing (102) comprising a radially outer surface (105) configured to abut an inwardly facing surface (22) of a bearing housing (20) for radially supporting the seal cartridge (100) in the bearing housing (20). The seal cartridge (100) comprises an inlet and an outlet flush fluid connector (150, 160) configured to pass a flush fluid for flushing an interface between a non-rotary sealing element (122) and a rotary sealing element (124) of a rotary seal (120). A connection section (154, 164) of one or more of the inlet and outlet flush fluid connector (150, 160) is movable between a flush position (FP) in which the connection section (154, 164) extends radially beyond a footprint area (FA) defined by the radially outer surface (105), and a service position (SP) in which the connection section (154, 164) is radially inside of the footprint area (FA). An agitator system (10), a mixing arrangement (1) and methods (200, 300, 400) system are also provided.

## Description

### Technical Field

The invention relates to the field of agitators. It is related to sealing an interface between an opening in a vessel and a rotary shaft of an agitator system. More particularly, it is related to seal cartridge for sealing an interface between an opening in a vessel and a rotary shaft of an agitator system extending into the vessel through the opening, an agitator system for mixing a liquid product comprising such a seal cartridge and a mixing arrangement comprising such an agitator system. Methods of mounting and dismounting such a seal cartridge, and a method of maintaining such an agitator system are also disclosed.

### Background Art

Agitators are used in numerous applications. In for example, the food industry, the pharma industry, and the chemical industry, mixing tanks including agitators are used in various processing operations where a product or similar held in a mixing tank is to be mixed or agitated. Agitators are commonly used where two or more constituents are to be mixed. Further, agitators are commonly used for preventing solids or particles dispersed in a liquid from floating to the surface or from sinking to the bottom.

Agitators for tanks typically include a rotatable shaft which is provided with one or more impellers or agitator blades used to agitate a product held in a tank. The rotatable shaft is typically rotated by a motor located outside the tank, meaning that the rotatable shaft extends into the tank through some form of opening or port. In order to prevent the product from escaping the tank or to prevent contaminations from entering the tank, the interface between the rotatable shaft and the opening needs to be sealed by a seal which can accommodate the rotation of the shaft in relation to the opening. Such seals are commonly referred to as mechanical seals or rotary seals.

In order for such mechanical seals to function properly over an extended period of time, the mechanical seals are generally flushed with a flush liquid or gas continuously, or at regular intervals during operation. Flushing of mechanical seals serve a variety of different purposes.

A common type of mechanical seal is the so-called wet running mechanical seal. A wet running mechanical seal is typically flushed continuously during operation. By such continuous flushing the sealing surfaces of the mechanical seal are wetted which generally improves the lifetime, cleanability and performance of the rotary seal. Further, by continuously flushing the mechanical seal heat is removed from the sealing surfaces which enhances the service life of the mechanical seal. Another purpose of flushing the mechanical seal is to prevent particles, dust and application fluid, such as a product from accumulating at the sealing surfaces or in the mechanical seal.

Another common type of mechanical seal is the so-called dry running mechanical seal. A dry running mechanical seal is not flushed during operation. However, a dry running mechanical seal is commonly flushed at regular intervals to remove particles or dust which may have accumulated at the sealing surfaces or in the mechanical seal.

In order for mechanical seals to receive and eject a flush liquid or gas, mechanical seals are commonly connected to hoses or ducts for receiving and ejecting the flush liquid or gas. When a mechanical seal is to be serviced it is typically removed from the agitator. Thus, during service the hoses or ducts will have to be disassembled from the mechanical seal. This in order to be able to remove the mechanical seal from the agitator. To disassemble such hoses or ducts is not only time-consuming but also troublesome due to the limited space typically available at the location of the rotary seal. Correspondingly, it is time-consuming and also troublesome to assemble such hoses or ducts after servicing the rotary seal. The same holds true when the rotary seal is to be replaced with a new one.

Even though currently available rotary seals provide high performance in terms of sealing performance and the possibility of flushing the rotary seals, there is room for improvement when it comes to designing rotary seals for agitator systems which are easier to install and replace.

### Summary

With the above in mind, it is an objective of the present invention to provide a seal cartridge for sealing an interface between an opening in a vessel and a rotary shaft of an agitator system extending into the vessel through the opening as well as an improved agitator system including such a seal cartridge.

Another objective is to provide a mixing arrangement for mixing a liquid product including such an agitator system.

Another objective is to provide a method of mounting such seal cartridge in a bearing housing of an agitator system.

Another objective is to provide a method of dismounting such seal cartridge being radially supported in bearing housing of an agitator system.

Another objective is to provide a method of maintaining an agitator system.

Another objective is to provide such a seal cartridge which is easier to mount.

Another objective is to provide such a seal cartridge which is easier to dismount.

Another objective is to provide such a seal cartridge which is easier to replace.

Another objective is to provide such a seal cartridge which is more cost-effective.

To achieve at least one of the above objects and also other objects that will be evident from the following description, a seal cartridge for sealing an interface between an opening in a vessel and a rotary shaft of an agitator system extending into the vessel through the opening, having the features defined in claim 1 is provided according to the present inventive concept. An agitator system for mixing a liquid product held in a vessel comprising such a seal cartridge is provided according to claim 13. A mixing arrangement for mixing a liquid product comprising such an agitator is provided according to claim 14. A method of mounting such a seal cartridge in a bearing housing of an agitator system is provided according to claim 15. A method of dismounting such a seal cartridge being radially supported in a bearing housing of an agitator system is provided according to claim 16. A method of maintaining an agitator system is provided according to claim 17.

More specifically, according to a first aspect, there is provided a seal cartridge for sealing an interface between an opening in a vessel and a rotary shaft of an agitator system extending into the vessel through the opening, the seal cartridge comprising:
a cartridge housing configured to be arranged in a bearing housing of the agitator system by being inserted into the bearing housing along an axial direction of the rotary shaft, the cartridge housing comprising a radially outer surface configured to abut an inwardly facing surface of the bearing housing for radially supporting the seal cartridge in the bearing housing,
a rotary seal coupled to the cartridge housing, and
an inlet and an outlet flush fluid connector fluidly connected to a respective flush fluid port of the seal cartridge housing and configured to pass a flush fluid for flushing an interface between a non-rotary sealing element and a rotary sealing element of the rotary seal,
   wherein a connection section of one or more of the inlet and outlet flush fluid connector is movable between a flush position in which the connection section extends radially beyond a footprint area defined by the radially outer surface as seen along the axial direction of the rotary shaft, and a service position in which the connection section is radially inside of the footprint area, thereby allowing the seal cartridge to be inserted in the bearing housing.

Hereby an improved seal cartridge for an agitator system is provided. More specifically, hereby an improved seal cartridge for sealing an interface between an opening in a vessel and a rotary shaft of an agitator system extending into the vessel through the opening is provided.

The seal cartridge is designed for and hence suitable for sealing an interface between an opening in a vessel and a rotary shaft of an agitator system extending into the vessel through the opening.

By the cartridge housing comprising a radially outer surface configured to abut an inwardly facing surface of the bearing housing for radially supporting the seal cartridge in the bearing housing, the seal cartridge may be inserted into the bearing housing along an axial direction of the rotary shaft while being counteracted from tilting or flexing in a radial direction by the radially outer surface abutting an inwardly facing surface of the bearing housing. Thus, the seal cartridge may be slid into the bearing housing along the axial direction while being radially supported.

The radially outer surface of the cartridge housing may be configured to abut an inwardly facing surface of a bearing housing indirectly, such as via a seal or a spacer.

The radially outer surface of the cartridge housing may be configured to abut an inwardly facing surface of a bearing housing directly.

The radially outer surface of the cartridge housing may be configured to abut an inwardly facing surface of a bearing housing indirectly and directly. Thus, radially outer surface of the cartridge housing may partially abut an inwardly facing surface of a bearing housing indirectly and partially abut the inwardly facing surface of a bearing housing directly.

By the cartridge housing comprising a rotary seal coupled to the cartridge housing the seal cartridge may provide for an efficient sealing between the rotary shaft and the cartridge housing while the rotary shaft is rotated in relation to the cartridge housing.

The seal cartridge may comprise one or more rotary seals, such as two, three or four rotary seals.

By the seal cartridge comprising an inlet and an outlet flush fluid connector fluidly connected to a respective flush fluid port of the seal cartridge housing, a flush fluid for flushing an interface between a non-rotary sealing element and a rotary sealing element of the rotary seal may be fed into and out of the seal cartridge via the connectors. In this way, the rotary seal may be flushed by the flush fluid.

By a connection section of one or more of the inlet and outlet flush fluid connector being movable between a flush position in which the connection section extends radially beyond a footprint area defined by the radially outer surface as seen along the axial direction of the rotary shaft, and a service position in which the connection section is radially inside of the footprint area, significant advantages are achieved.

By a connection section extending radially beyond the footprint area in the flush position the connection section may easily be accessed such that a conduit, a hose, a duct or similar may be mounted to or dismounted from the connection section. Further, by a connection section being radially inside the footprint area in the service position the connection section may be moved out of the way such that the seal cartridge may be inserted into or removed from the bearing housing along the axial direction without the connection section hindering the insertion or removal. Thus, the seal cartridge may be inserted into or removed from the bearing housing along the axial direction without removing the connection section. In this way, servicing or replacement of the seal cartridge may be significantly simplified since the connection section may be easily accessible in the flush position and moved out of the way when the seal cartridge is to be inserted into or removed from the bearing housing.

In practice, both the connection section of the inlet flush fluid connector and the connection section of the outlet flush fluid connector may be movable between a flush position in which the connection section extends radially beyond the footprint area, and a service position in which the connection section is radially inside of the footprint area.

In this way, both the connection section of the inlet flush fluid connector and the connection section of the outlet flush fluid connector may be easily accessed in the flush position. Hence, the both the connection section of the inlet flush fluid connector and the connection section of the outlet flush fluid connector may be connected to a respective conduit, hose, duct or similar to flush the rotary seal.

The connection section of the inlet flush fluid connector and the connection section of the outlet flush fluid connector may each be movable between a flush position in which the connection section extends radially beyond a footprint area defined by the radially outer surface as seen along the axial direction of the rotary shaft, and a service position in which the connection section is radially inside of the footprint area, thereby allowing the seal cartridge to be inserted in the bearing housing.

It is however, to be understood that seal cartridge may be inserted into or removed from the bearing hosing along the axial direction even if only one of the connection section of the inlet flush fluid connector and the connection section of the outlet flush fluid connector is movable between a flush and a service position as long as the other one of the connection section of the inlet flush fluid connector and the connection section of the outlet flush fluid connector is provided radially inside of the footprint area.

By "footprint area" is here meant an area defined by a projection of the radially outer surface along the axial direction. In other words, the footprint area is the area which a projection of the radially outer surface along the axial direction will occupy in plane perpendicular to the axial direction. Thus, the footprint area is the area needed for the seal cartridge to be moved along the axial direction into and out of the bearing housing to/from its intended position during operation.

The connection section of the inlet flush fluid connector and the connection section of the outlet flush fluid connector may each be movable between a flush position in which the connection section extends radially beyond a footprint area defined by the radially outer surface as seen along the axial direction of the rotary shaft, and a service position in which the connection section is radially inside of the footprint area, thereby allowing the seal cartridge to be inserted in the bearing housing with the inlet flush fluid connector and an outlet flush fluid connector connected to the respective flush fluid port of the seal cartridge housing.

The radially outer surface of the cartridge housing may be provided with one or more outer seals configured to abut seal against an inwardly facing surface of a bearing housing.

Each outer seal may comprise an O-ring provided in a groove circumscribing the radially outer surface of the cartridge housing.

The connection section may be swivable between the flush position and the service position, which is advantageous in that the connection section may be moved by between the flush position and the service position in a controlled manner where the connection section follows a predetermined movement path.

The connection section may be swivable between the flush position and the service position in a plane extending substantially perpendicular to the flush fluid port, which is advantageous in that a compact solution may be realized.

The connection section may be swivably fluidly connected to a fixed section of the flush fluid connector attached to the flush fluid port, such that the connection section is swivable between the flush position and the service position, which is advantageous in that the connection section may be moved by between the flush position and the service position in a controlled manner where the connection section follows a predetermined movement path.

The connection section may be fluidly connected to the flush fluid port via a flexible and/or resilient section, such that the connection section is movable between the flush position and the service position, which is advantageous in that the connection section may be moved by between the flush position and the service position along an arbitrary movement path. It is to be understood that such an arbitrary movement path will in practice be restricted by the actual flexibility of the section as well as the space available. This means that the that the connection section may be moved by between the flush position and the service position in even more narrow spaces where the connection section for instance may be tucked into a narrow space.

The flexible and/or resilient section may for instance be a rubber hose section, a highly flexible hose section circumscribed by a helical spring or similar.

Each flush fluid port may have a major component in a tangential direction of the rotary shaft, which is advantageous in that the that the connection section may occupy less space in a radial direction of the rotary shaft when in the service position.

The connection section may comprise a push-in connector configured to receive and releasably lock a conduit for passing the flush fluid, which is advantageous in that the conduit may be releasably locked to the connection section without using any tools. Thus, the conduit may be inserted into and locked in relation to the connection section without using any tools. Thus, the conduit may be unlocked in relation to the connection section and removed from the connection section without using any tools.

In this regard, it is to be noted that a push-in connector may be referred to by a multitude of different wordings including but not limited to a push-to-pull connector, a push-to-connect connector, a push-fit connector, or an instant connector.

The inlet and the outlet flush fluid connectors may be configured to be fluidly connected to a flush space at least partially defined by the non-rotary sealing element and the rotary sealing element, which is advantageous in that the interface between the non-rotary sealing element and the rotary sealing element of the rotary seal may be efficiently flushed via the flush space.

The non-rotary sealing element and the rotary sealing element may each be configured to circumscribe the rotary shaft, wherein the non-rotary sealing element and the rotary sealing element may be configured to seal against each other, wherein the non-rotary sealing element may be sealingly coupled to the cartridge housing and the rotary sealing element may be configured to be sealingly coupled to the rotary shaft, which is advantageous in that the seal cartridge may provide for an efficient sealing between the rotary shaft and the cartridge housing while the rotary shaft is rotated in relation to the cartridge housing, as well as while the rotary shaft is stationary in relation to the cartridge housing. Thus, the seal cartridge may provide for an efficient sealing between the rotary shaft and the cartridge housing during operation as well as during standstill.

The seal cartridge may further comprise an inner sleeve rotationally coupled to the cartridge housing via a bearing, the inner sleeve being configured to receive the rotary shaft along the axial direction and to co-rotate with the rotary shaft, wherein the rotary sealing element is sealingly coupled to the inner sleeve, which is advantageous in that the rotary shaft may be received in the seal cartridge in a secure manner where the rotary shaft is rotationally coupled to the sleeve while at the same time providing for an efficient sealing between the rotary shaft and the cartridge housing while the rotary shaft is rotated in relation to the cartridge housing. Moreover, the rotary shaft may be received in the seal cartridge in a secure manner where the rotary shaft is rotationally coupled to the sleeve while not directly affecting the adjustment or configuration of rotary seal.

The flush space may further be defined by the rotary shaft.

The flush space may further be defined by the inner sleeve.

The cartridge housing may comprise a further radially outer surface provided with one or more outer seals configured to abut and seal against an internal surface portion associated with the vessel defining the opening, which is advantageous in that the seal cartridge may provide for an efficient seal between the further radially outer surface thereof in relation to the opening in the vessel. Thus, the interface between the further radially outer surface of the cartridge housing and the internal surface portion associated with the vessel may be efficiently sealed by the one or more outer seals.

The further radially outer surface may be a separate surface as compared to the radially outer surface.

The further radially outer surface may be spaced apart from the radially outer surface in the axial direction.

The further radially outer surface may be integral with the radially outer surface and spaced apart from the radially outer surface in the axial direction.

The "internal surface portion associated with the vessel defining the opening" may be any internal surface portion or surface facing an opening and circumscribing the opening. Thus, the internal surface portion associated with the vessel defining the opening may be any internal surface portion or surface having a major component facing the opening and circumscribing the opening. Further, the internal surface portion associated with the vessel defining the opening may be an internal surface portion or surface of the vessel itself or may be an internal surface portion or internal surface connected to the vessel, such as an internal surface or internal surface portion of a flange or duct section connected to the vessel. Further, the internal surface portion associated with the vessel will often times be an internal surface of a flange connected to the vessel at an opening in the vessel itself. Such flange may be integrally formed with the vessel, welded to the vessel, bolted to the vessel or riveted to the vessel to give a few non-limiting examples.

Each outer seal may comprise an O-ring provided in a groove circumscribing the further radially outer surface of the cartridge housing.

The flush fluid may comprise one or more of water, steam, a cleaning liquid, an oil, such as mineral oil, air, an inert gas, such as nitrogen, and an alcohol, such as ethanol, which is advantageous in that an efficient flushing of the rotary seal may be achieved. Thus, the by flushing the rotary seal with a flush fluid of the above type, for instance the performance of the rotary seal in terms of tightness may be enhanced. Furter, by flushing the rotary seal with a flush fluid of the above type excess heat may be removed from the rotary seal thereby prolonging its service life. Furthermore, by flushing the rotary seal with a flush fluid of the above type particles and/or dust may be flushed away from the rotary seal thereby prolonging its service life.

According to a second aspect of the invention, there is provided an agitator system for mixing a liquid product held in a vessel, the agitator system comprising:
a rotary shaft provided with one or more impellers configured to mix the liquid product,
a drive unit coupled to the rotary shaft and configured to rotate the rotary shaft, and
a seal cartridge according to the first aspect, arranged in a bearing housing, for sealing an interface between an internal surface portion associated with the vessel defining an opening in the vessel for receiving the rotary shaft and the rotary shaft.

In general, features of this aspect provide similar advantages as discussed above in relation to the first aspect. Consequently, said advantages will not be repeated in order to avoid undue repetition.

According to a third aspect of the invention, there is provided a mixing arrangement for mixing a liquid product, the mixing arrangement comprising:
a vessel configured to hold the liquid product, and
an agitator system according to the second aspect, wherein the rotary shaft extends into the vessel through the opening such that the one or more impellers are located in the vessel, and the drive unit is located outside of the vessel, wherein the interface between the internal surface portion associated with the vessel and the rotary shaft is sealed by the seal cartridge.

In general, features of this aspect provide similar advantages as discussed above in relation to the first aspect. Consequently, said advantages will not be repeated in order to avoid undue repetition.

According to fourth aspect of the invention, there is provided a method of mounting a seal cartridge according to the first aspect, in a bearing housing of an agitator system, the method comprising:
inserting, while the connection section is in the service position, the seal cartridge into the bearing housing along the axial direction of the rotary shaft, such that the radially outer surface abuts an inwardly facing surface of the bearing housing thereby radially supporting the seal cartridge in the bearing housing, and
moving the connection section from the service position to the flush position.

In general, features of this aspect provide similar advantages as discussed above in relation to the first aspect. Consequently, said advantages will not be repeated in order to avoid undue repetition.

According to a fifth aspect of the invention, there is provided a method of dismounting a seal cartridge according to the first aspect, being radially supported in a bearing housing of an agitator system, by the radially outer surface abutting an inwardly facing surface of the bearing housing, the method comprising:
moving the connection section from the flush position to the service position, and
removing, while the connection section is in the service position, the seal cartridge from the bearing housing along the axial direction of the rotary shaft.

In general, features of this aspect provide similar advantages as discussed above in relation to the first aspect. Consequently, said advantages will not be repeated in order to avoid undue repetition.

According to a sixth aspect of the invention, there is provided a method of maintaining an agitator system according to the second aspect, the method comprising:
dismounting the seal cartridge using the method of the fifth aspect, and
mounting a seal cartridge using the method of the fourth aspect, wherein the mounted seal cartridge is the dismounted seal cartridge after servicing the dismounted seal cartridge, or wherein the mounted seal cartridge is a replacement seal cartridge according to the first aspect.

In general, features of this aspect provide similar advantages as discussed above in relation to the first aspect. Consequently, said advantages will not be repeated in order to avoid undue repetition.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular component parts of the device described as such device may vary. It is also to be understood that the terminology used herein is for the purpose of describing particular embodiments only and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings does not exclude other elements or steps.

Thus, throughout this specification, unless the context requires otherwise, the word "comprise" or variations such as "comprises" or "comprising", will be understood to imply the inclusion of a stated integer or group of integers but not the exclusion of any other integer or group of integers.

### Brief Description of the Drawings

The above and other aspects of the present inventive concept will now be described in more detail, with reference to appended figures showing embodiments or variants of the inventive concept. The figures should not be considered limiting, instead, they are used for explaining and understanding.

As illustrated in the figures, the sizes of details, layers and regions may be exaggerated for illustrative purposes and, thus, are provided to illustrate the general structures of variants. Like reference numerals refer to like elements throughout.
Fig. 1A is a schematic partial cross-sectional view of mixing arrangement having a top mounted agitator system attached to a vessel.
Fig. 1B is a schematic partial cross-sectional view of mixing arrangement having a side mounted agitator system attached to a vessel.
Fig. 2 is a schematic perspective view of how a seal cartridge according to the present inventive concept is installed in an agitator system by being received in a bearing housing of the agitator system.
Fig. 3 is a schematic side view of the seal cartridge of Fig. 2.
Fig. 4 is a perspective view of the seal cartridge of Fig. 2 in which the footprint area of the seal cartridge is indicated.
Fig. 5 is a schematic bottom view of the seal cartridge of Fig. 2.
Figs. 6A-6C are schematic side views of central portions of a seal cartridges according to embodiments.
Fig. 7 is a flow chart of a method of mounting a seal cartridge.
Fig. 8 is a flow chart of a method of dismounting a seal cartridge.
Fig. 9 is a flow chart of a method of maintaining an agitator system.

### Detailed Description

The present inventive concept will now be described more fully hereinafter with reference to the accompanying drawings, in which currently preferred variants or embodiments of the inventive concept are shown. This inventive concept may, however, be implemented in many different forms and should not be construed as limited to the variants set forth herein; rather, these variants are provided for thoroughness and completeness, and fully convey the scope of the present inventive concept to the skilled person.

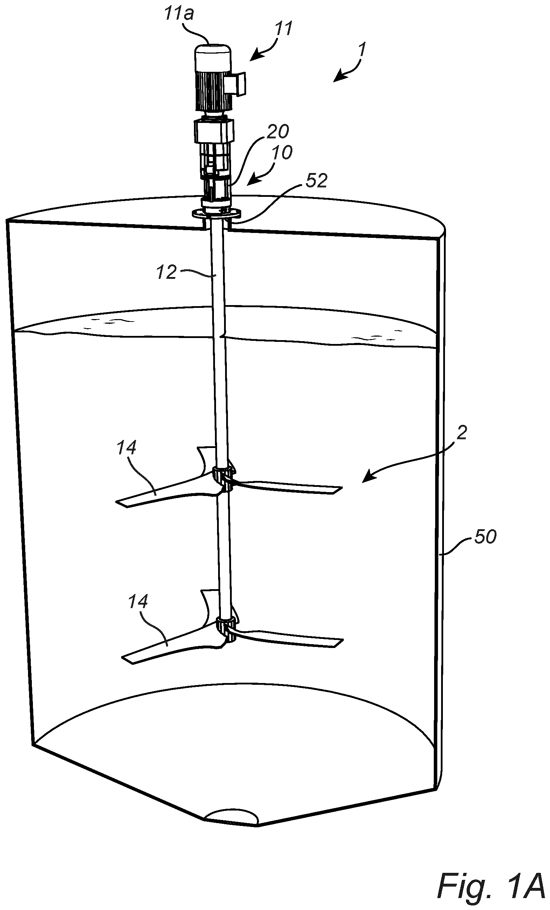

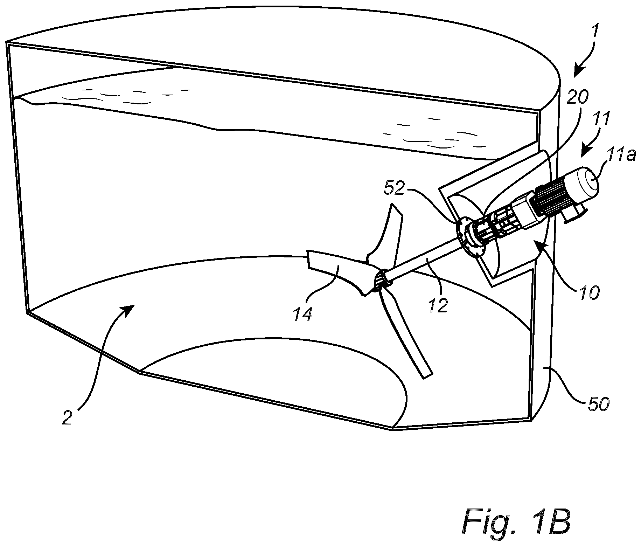

Initially two set-ups of mixing arrangements 1 will be briefly described with reference to Figs. 1A and 1B. Each mixing arrangement 1 comprises an agitator system 10 and a vessel 50.

Agitator systems 10 is, as known in the art, used to mix, agitate or blend a product 2 or similar held in the vessel 50. Thus, the general function of the mixing arrangement 1 and its agitator system 10 will not be described in detail hereinafter. Each agitator system 10 has a rotary shaft 12 which extends into its associated vessel 50, such as a stainless tank or similar, through an opening 52 in the vessel 50.

The rotary shaft 12 of the agitator system 10 of Fig. 1A is provided with two impellers 14 configured to agitate, mix or blend a product 2, such as a liquid product 2, held in the vessel 50.

The rotary shaft 12 of the agitator system 10 of Fig. 1B is provided with one impeller 14 configured to agitate, mix or blend a product 2, such as a liquid product 2, held in the vessel 50.

Each agitator system 10 has a drive unit 11 including an electrical motor 11a that transmits the energy required for agitating, mixing, and blending the product 2, either directly or via a gearbox, to the rotary shaft 12 shaft. As the rotary shaft 12 rotates, the impellers 14 are turned. The impeller movement typically creates a high flow of the product 2 with low shear due to a highly effective axial pumping effect on the product 2 in the vessel 50. This results in effective agitating, mixing or blending of the entire contents, i.e. the product 2 of the vessel 50.

The agitator system 10 of Fig. 1A is similar to the agitator system 10 of Fig. 1B. However, the agitator system 10 of Fig. 1A is top-mounted, whereas the agitator system 10 of Fig. 1B is side-mounted. This means that the rotary shaft 12 of the agitator system 10 of Fig. 1A extends into the vessel in a downwards vertical direction, whereas the rotary shaft 12 of the agitator system 10 of Fig. 1B extends into the vessel in a downwards oblique direction.

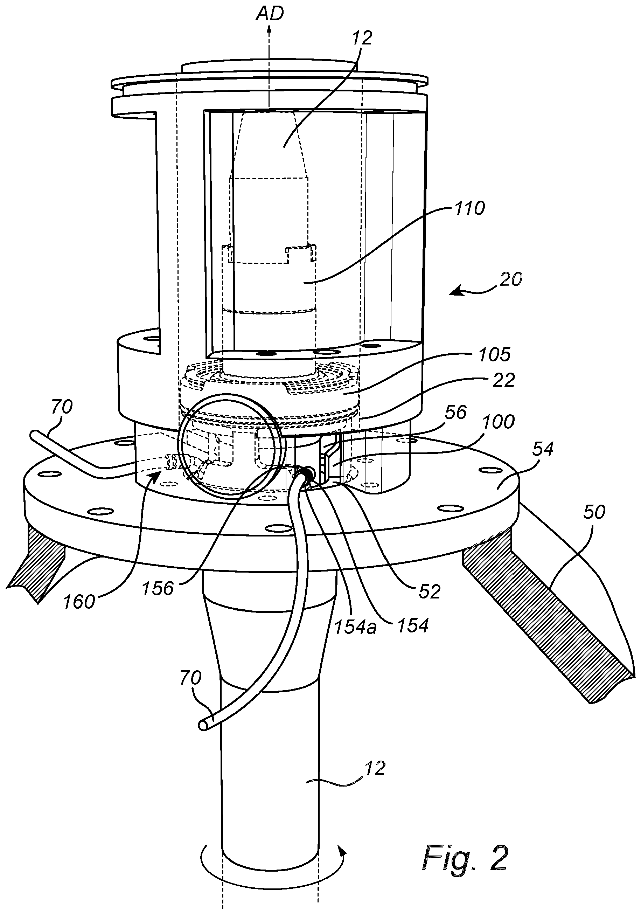

Each agitator system 10 has a bearing housing 20 arranged between the vessel 50 and the drive unit 11. The bearing housing 20 supports the drive unit 11. Thus, the bearing housing 20 holds or fixes the drive unit 11 in relation to the vessel 50. The bearing housing 20 is provided at the interface between the opening 52 in the vessel 50 and the rotary shaft 12. The bearing housing 20 further has the purpose of receiving and rotationally supporting the rotary shaft 12 at the interface between the opening 52 and the rotary shaft 12. In order to seal the interface between the opening 52 in the vessel 50 and the rotary shaft 12 a seal cartridge 100 is, as illustrated in Fig. 2, received in the bearing housing 20.

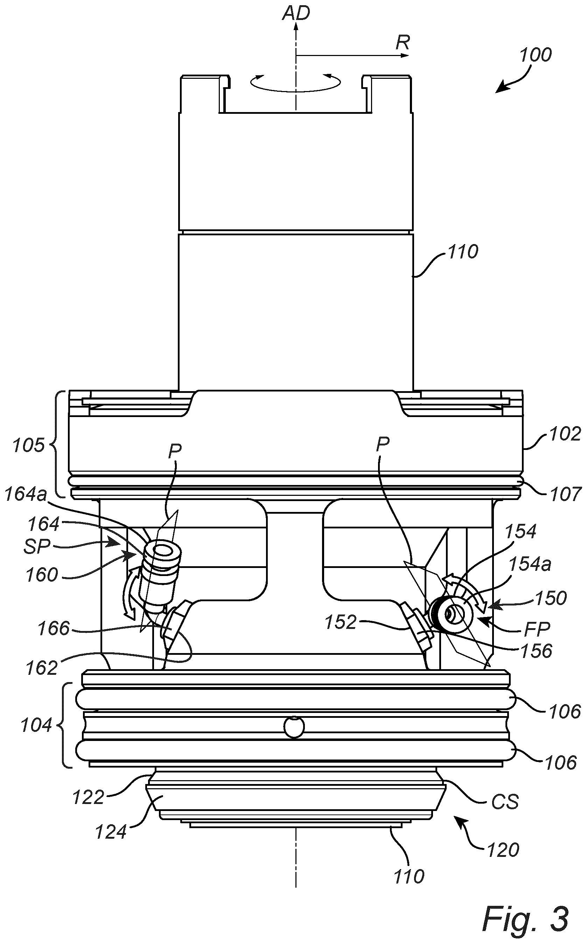

The design of the seal cartridge 100 of the agitator systems 10 of Figs. 1A and 1B will be described in more detail further below while referring to Figs. 3, 4 and 5.

As illustrated in Fig. 2, the seal cartridge 100 is received in the bearing housing 20. By the seal cartridge 100 being received in the bearing housing 20, the interface between the opening 52 in the vessel 50 and the rotary shaft 12 extending into the vessel 50 through the opening 52 is sealed by the seal cartridge 100. Thus, the seal cartridge 100 provides for that the interface between the opening 52 in the vessel 50 and the rotary shaft 12 is sealed in a rotary manner. Thus, the seal cartridge 100 provides for that the interface between the opening 52 in the vessel 50 and the rotary shaft 12 is sealed when the rotary shaft 12 is rotated.

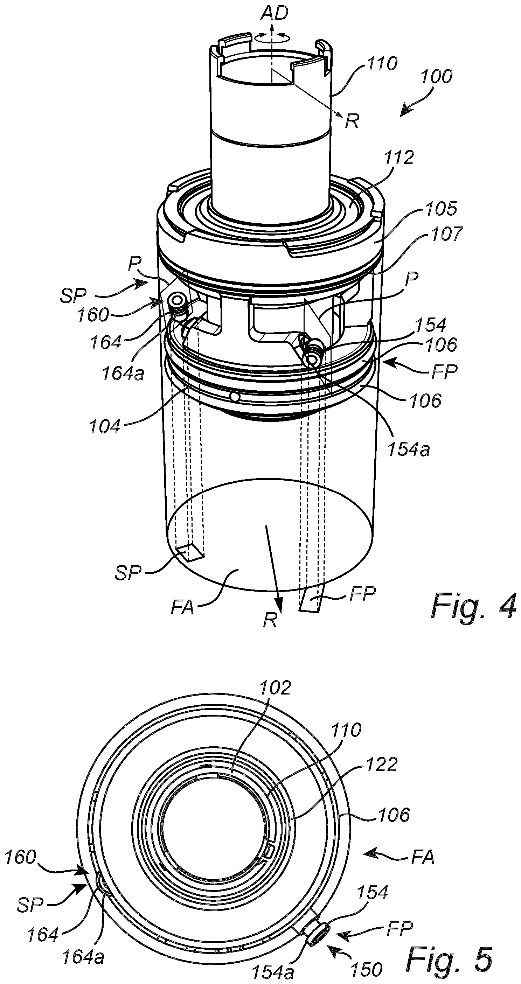

Now turning to Figs. 3, 4 and 5. Figs. 3, 4 and 5 illustrates the seal cartridge 100 used for sealing the interface between the opening 52 in the vessel 50 and the rotary shaft 12 as illustrated in Fig. 2. Fig. 5 illustrates the seal cartridge 100 from below.

The seal cartridge 100 comprises a cartridge housing 102. The cartridge housing 102 is configured to support and hold together the respective components of the seal cartridge 100. The cartridge housing 102 is configured to support the seal cartridge in relation to the bearing housing 20. The depicted cartridge housing 102 is machined from a metal material. Suitable metal materials for the cartridge housing 102, include aluminum, alloy steels and stainless steel to give a few non limiting examples. Other materials are however conceivable, such as nickel-based alloys, fiber reinforced plastics or similar.

The cartridge housing 102 is configured to be arranged in a bearing housing 20 of an agitator system 10, i.e. as illustrated in Fig. 2. The depicted cartridge housing 102 is configured to be received in the bearing housing 20 by being inserted into the bearing housing 20 along an axial direction AD of the rotary shaft 12. Thus, the depicted cartridge housing 102 is configured to be received in the bearing housing 20 by being inserted into the bearing housing 20 along the axial direction AD of the rotary shaft 12. More specifically, the depicted cartridge housing 102 is configured to be received in the bearing housing 20 by being translated downwards in Fig. 2, i.e. in a direction opposite to the arrow indicating the axial direction AD in e.g. Fig. 2.

As best illustrated in Fig. 3, the cartridge housing 102 comprises a radially outer surface 105. The radially outer surface 105 is configured to abut an inwardly facing surface 22 of the bearing housing 20 for radially supporting the seal cartridge in the bearing housing 20, as illustrated in Fig. 2. In this way, the seal cartridge 100 may be inserted into the bearing housing 20 along the axial direction of the rotary shaft 12 while being counteracted from tilting or flexing in a radial direction R. More specifically, by the radially outer surface 105 abutting the inwardly facing surface 22 of the bearing housing 20, the seal cartridge 100 may be firmly fixed in any radial direction R while still being capable of being slid into the bearing housing 20 along the axial direction AD.

It is to be noted that the radially outer surface 105 of the cartridge housing 100 may be configured to abut the inwardly facing surface 22 of the bearing housing 20 indirectly or partially indirectly via a for instance a seal 107. To this end, the radially outer surface 105 may, as best illustrated in Figs. 3 and 4, be provided with an outer seal 107. In the depicted seal cartridge 100, the radially outer surface 105 is provided with one outer seal 107, in form of an O-ring 107. It is however to be noted that the radially outer surface 105 may be provided with more than one outer seal 107.

The cartridge housing 102 of the depicted seal cartridge 100 comprises a further radially outer surface 104. The further radially outer surface 104 is provided below the radially outer surface 105 along the axial direction AD. The further radially outer surface 104 is provided with one or more outer seals 106. The depicted outer seals are formed of O-rings 106. The outer seals 106 are configured to abut and seal against an internal surface portion 56 associated with the vessel 50 defining the opening 52. Such internal surface portion 56 associated with the vessel 50 may be an internal surface portion 56 of a flange 54. Such flange 54 may for instance be welded, bolted or riveted to the vessel 50. However, the internal surface portion 56 associated with the vessel 50 may for instance be a surface portion the vessel 50 itself, or a surface portion of a duct pipe, or similar mounted to the vessel 50.

As best illustrated in Fig. 3, the depicted seal cartridge 100 comprises a rotary seal 120. The rotary seal 120 is coupled to the cartridge housing 102 like the other components of the seal cartridge 100. Rotary seals 120 are known as such and will not be described in greater detail herein. However, a rotary seal 120 typically comprises one or more pairs of sealing elements, where each pair of sealing elements includes a non-rotary sealing element 122 and a rotary sealing element 124. The depicted seal cartridge 100 includes two pairs of sealing elements, although only the lower pair of sealing elements 122, 124 are visible in Fig. 3 given the selected view of Fig. 3. It is however to be noted that a single pair of sealing elements 122, 124 is sufficient in the rotary seal 120.

The depicted non-rotary sealing element 122 and the depicted rotary sealing element 124 are each configured to circumscribe the rotary shaft 12. The non-rotary sealing element 122 is sealingly coupled to the cartridge housing 103. To this end, a seal, for instance in form of an O-ring, may be provided between the non-rotary sealing element 122 and the cartridge housing 103. The rotary sealing element 124 is configured to be sealingly coupled to the rotary shaft 12. In this way, the non-rotary sealing element 122 and the rotary sealing element 124 seal against each other when the rotary shaft 12 is rotated in relation to the cartridge housing 102, as well as when the rotary shaft 12 is stationary in relation to the cartridge housing 102. Thus, the non-rotary sealing element 122 and the rotary sealing element 124 bear against each other at the contact surface CS. This means that the rotary sealing element 124 will rotate and slide against the non-rotary sealing element 122 in a fluid tight fashion when the rotary shaft 12 is rotated in relation to the cartridge housing 102. This also means that the rotary sealing element 124 will bear against and consequently seal against the non-rotary sealing element 122 in a fluid tight fashion when the rotary shaft 12 is stationary in relation to the cartridge housing 102.

The seal cartridge 100 may, as best illustrated in Figs. 3 and 4, comprise an inner sleeve 110. The inner sleeve 110 may be rotationally coupled to the cartridge housing 102 via a bearing 112 as illustrated in Fig. 4. The depicted inner sleeve 110 is configured to receive the rotary shaft 12 along an axial direction AD thereof and to co-rotate with the rotary shaft 12. Thus, in practice, the rotary sealing element 124 may be sealingly coupled to the inner sleeve 110 so as to co-rotate with the rotary shaft 12. To this end, a seal, for instance in form of an O-ring, may be provided between the rotary sealing element 124 and the inner sleeve 110.

The rotary seal 120 of the depicted seal cartridge 100 is a so-called wet running mechanical seal 120 which typically is flushed continuously during operation of the agitator system 10. In other words, the rotary seal 120 is typically flushed continuously when the rotary shaft 12 is rotated in relation to the cartridge housing 102. It is to be noted that the rotary seal 120 may be a dry running rotary seal which is flushed at regular time intervals.

To this end, a flush fluid is fed to a flush fluid space which is least partially defined by the non-rotary sealing element 122 and the rotary sealing element 124. The flush fluid space is located between the non-rotary sealing element 122 and the rotary sealing element 124, and the rotary shaft 12. In this way, the interface between the non-rotary sealing element 122 and the rotary sealing element 124 may be flushed from the inside or backside. Further, in this way, the flush fluid may be prevented or counteracted from reaching the product 2 held in the vessel 50. In practice, in the depicted seal cartridge 100, the flush fluid space is located between the non-rotary sealing elements 122 of the respective pairs of sealing elements and the inner sleeve 110, while being restricted in the axial direction by the rotary sealing elements 124 of the respective pairs of sealing elements. In this way, the flush fluid may reach the interface or contact surface CS between the non-rotary sealing element 122 and the rotary sealing element 124 of each pair of sealing elements from the inside or backside.

In this way, the interface or contact surface CS between the non-rotary sealing element 122 and the rotary sealing element 124 may be wetted by the flush fluid. However, in case of an overpressure in the vessel 50, air or product 2 from the vessel may enter in between the non-rotary sealing element 122 and the rotary sealing element 124 and be flushed away by the flush fluid when reaching the flush fluid space. The same holds true for e.g. dust and particles emanating from the product 2 or the non-rotary sealing element 122 and the rotary sealing element 124. Further, heat may be removed from the non-rotary sealing element 122 and the rotary sealing element 124 by the flush fluid.

In order to feed a flush fluid to the rotary seal 120 and hence to the flush fluid space of the seal cartridge 100, the depicted seal cartridge 100 comprises an inlet and an outlet flush fluid connector 150, 160. The inlet and an outlet flush fluid connector 150, 160 are fluidly connected to a respective flush fluid port 152, 162 of the seal cartridge housing 103 as best illustrated in Fig. 3. The inlet and an outlet flush fluid connectors 150, 160 and the flush fluid ports 152, 162 are configured to pass a flush fluid for flushing the interface between the non-rotary sealing element 122 and the rotary sealing element 124 of the rotary seal 120. In other words, the inlet and an outlet flush fluid connectors 150, 160 and the flush fluid ports 152, 162 are configured to pass a flush fluid to and from the flush fluid space in order to flush the interface or contact surface CS between the non-rotary sealing element 122 and the rotary sealing element 124 of the rotary seal 120 from the inside or the backside as have been explained above. To this end, the flush fluid ports 152, 162 are each in fluid communication with the flush fluid space such that a flus fluid may be fed to and extracted from the seal cartridge 100 via the flush fluid ports 152, 162.

In Figs. 3-5 the right hand side flush fluid connector is denoted 150 and is hence discussed in terms of being an inlet flush fluid connector 150. Correspondingly, the left hand side flush fluid connector is denoted 160 and is hence discussed in terms of being an outlet flush fluid connector 160. It is however to be understood that the inlet and an outlet flush fluid connectors 150, 160 are interchangeable since the flush fluid may be fed into one of the flush fluid connectors 150, 160 and extracted from the other one of the flush fluid connectors 150, 160.

The fluish fluid inlet connector 150 of the depicted seal cartridge 100 is provided with a connection section 154. Correspondingly, the fluish fluid outlet connector 160 of the depicted seal cartridge 100 is provided with a connection section 164. The connection sections 154 164 are each movable between a flush position FP in which the connection section 154, 164 extends radially beyond a footprint area FA defined by the radially outer surface 105 as seen along the axial direction AD of the rotary shaft 12, and a service position SP in which the connection section 154, 164 is radially inside of the footprint area FA, as illustrated in Fig. 4. In this way, the seal cartridge 100 may be inserted into the bearing housing 20 along the axial direction when the connection sections 154, 164 are in the service position SP. This because, the connection sections 154, 164 are both located within the footprint area FA of the seal cartridge 100 when in the service position SP, meaning that the connection sections 154, 164 will not hinder or affect the insertion of the seal cartridge 100 into the bearing housing 20.

In Figs. 3-5, the connection section 154 of the inlet flush fluid connector 150 is in the flush position FP, whereas the connection section 164 of the inlet flush fluid connector 160 is in the service position SP.

Now turning in particular to Fig. 4. In Fig. 4, the footprint area FA defined by the radially outer surface 105 as seen along the axial direction AD is indicated below the seal cartridge 100. As clearly illustrated in Fig. 4, the footprint area FA is the maximum cross sectional area of the depicted seal cartridge 100 in a plane perpendicular to the axial direction AD. Thus, when there is nothing extending radially beyond the footprint area FA the seal cartridge 100 may be inserted into the bearing housing 20 along the axial direction AD. Correspondingly, when there is nothing extending radially beyond the footprint area FA the seal cartridge 100 may be removed from the bearing housing 20 along the axial direction AD.

Further, in Fig. 4 it is schematically illustrated below the seal cartridge 100 how the inlet flush fluid connector 150 which is in the flush position FP extends radially beyond the footprint area FP. Correspondingly, in Fig. 4 it is schematically illustrated how the inlet flush fluid connector 160 which is in the service position SP is radially inside of the footprint area FA. This is also illustrated in Fig. 5 which shows the seal cartridge from below.

When the connection sections 154, 164 are in the flush position FP, the connection sections 154, 164 are easily accessible from the outside of the bearing housing 20 as illustrated in Fig. 2. Thus, when the seal cartridge 100 is located in the bearing housing 20, the connection sections 154, 165 may be moved to the flush position FP to facilitate connection of a conduit, a hose or similar for feeding and extracting a flush fluid to/from the connection sections 154, 165.

It is to be noted that only one of the connection sections 154, 164 may have to be movable whereas the other one may be fixed in relation to the cartridge housing 102. In such situation, the fixed connection section is to advantage to be located radially inside the footprint area FA such that the fixed connection section need not be removed from the cartridge housing 102 when the seal cartridge 100 is to be inserted into or removed from the bearing housing 20.

Thus, several significant advantages are achieved by the to the possibility to move the connection sections 154, 164, or at least one of the connection sections 154, 165, between the flush position FP and the service position FP.

In the depicted seal cartridge 100, the connection sections 154, 164 are each swivable between the flush position FP and the service position SP as generally indicated by a respective double arrow in Fig. 3.

Further, as illustrated in Figs. 3 and 4, the connection sections 154, 164 may be swivable between the flush position FP and the service position SP in a respective plane P extending substantially perpendicular to the associated flush fluid port 152, 162.

Further, as illustrated in Figs. 3 and 4, the connection sections 154, 164 may be swivably fluidly connected to a respective fixed section 156, 166 of the flush fluid connector 150, 160. Such fixed section 156, 166 may as illustrated in Figs. 3 and 4 be attached to a flush fluid port 152, 162. In this way, the connection sections 154, 166 may be swivable between the flush position FP and the service position SP. Such fixed section 156, 166 may as illustrated in Figs. 3 and 4 be threaded into an associated flush fluid port 152, 162. It is, however, to be understood that such fixed section 156, 166 may be attached to an associated flush fluid port 152, 162 in any suitable manner, such as by welding, by soldering, by glueing or similar.

Further, as illustrated in Figs. 3 and 4, each flush fluid port 152, 162 may have a major component in a tangential direction of the rotary shaft 12. Thus, the flush fluid ports 152, 162 may each have a respective major component in a tangential direction of the axial direction AD. In the seal cartridge 100 of Figs. 2-5, the flush fluid ports 152, 162 are each inclined with an angle of about 30 degrees with respect to the axial direction AD. More specifically, the flush fluid ports 152, 162 are each inclined upwards with an angle of about 30 degrees with respect to the axial direction AD. Irrespective of the inclination, the flush fluid ports 152, 162 of the depicted seal cartridge 100 each have a respective major component in a tangential direction of the axial direction AD. It is however to be understood that other inclinations of the flush fluid ports 152, 162 are conceivable.

Further, as illustrated in Figs. 2-5, the connection sections 154, 164 may comprise a respective push-in connector 154a, 164a. Such push-in connectors 154a, 164a may as is known in the art also be referred to as push-to-pull connectors, push-to-connect connectors, push-fit connectors, or instant connectors to give a few non-limiting examples. To this end, the push-in connectors 154a, 164a may be configured to receive and releasably lock a conduit 70 for passing the flush fluid to the seal cartridge 100.

Different types of flush fluids may be used to flush the interface between a non-rotary sealing element 122 and a rotary sealing element 124 of the rotary seal 120. In practice, different flush fluids may be used depending on the product 2 and application at hand. However, flush fluids comprising one or more of water, steam, a cleaning liquid, an oil, such as mineral oil, air, an inert gas, such as nitrogen, and an alcohol, such as ethanol may be used to advantage in the seal cartridge 100.

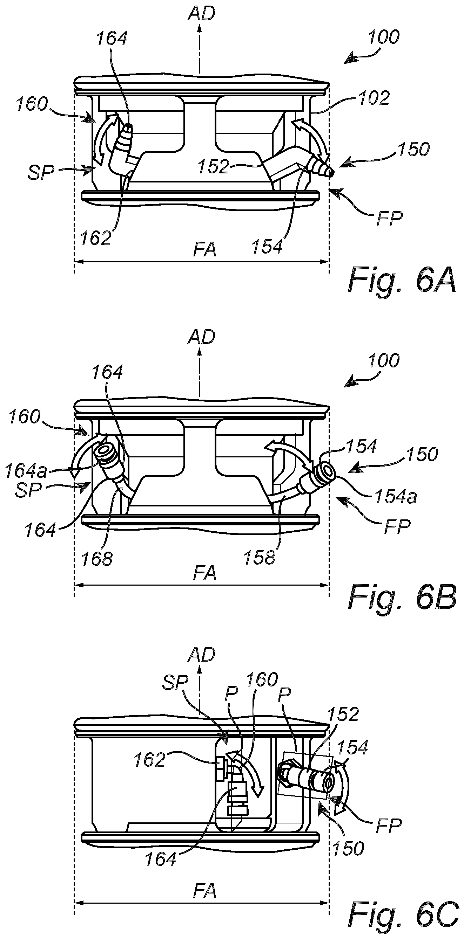

Now turning to Fig. 6A. Fig. 6A shows a central portion of a seal cartridge 100. The seal cartridge 100 of Fig. 6A is similar to the seal cartridge 100 of Figs. 2-5. Given this, only relevant differences, not already described, will be described in the following. In Fig. 6A, the inlet and an outlet flush fluid connectors 150, 160 are differently designed as compared to the inlet and an outlet flush fluid connectors 150, 160 of Figs. 2-5. In Fig. 6A the inlet and an outlet flush fluid connectors 150, 160 are formed by a respective angled hose connection 150, 160 which are threaded into a respective fluid flush port 152, 162. Each angled hose connection 150, 160 comprises a connection section 154, 164 which is configured to be inserted in a conduit, a hose or similar. The connection section 154, 164 of each angled hose connection 150, 160 may, as indicated by the double arrows, be moved between a flush position FP in which the connection section 154, 164 extends radially beyond the footprint area FA, and a service position SP in which the connection section 154, 164 is radially inside of the footprint area FA. The connection section 154, 164 of each angled hose connection 150, 160 may be moved between the flush position FP and the service position SP by rotating the angled hose connection 150, 160 in relation to the cartridge housing 102 at the threaded connection between the angled hose connection 150, 160 and the associated flush fluid port 152, 162.

Now turning to Fig. 6B. Fig. 6B shows a central portion of a seal cartridge 100. The seal cartridge 100 of Fig. 6B is similar to the seal cartridge 100 of Figs. 2-5. Given this, only relevant differences, not already described, will be described in the following. In Fig. 6B, the inlet and an outlet flush fluid connectors 150, 160 are differently designed as compared to the inlet and an outlet flush fluid connectors 150, 160 of Figs. 2-5. In Fig. 6B the flush fluid connectors 150, 160 comprises a respective flexible hose section 158, 168. The flexible hose section is connected between a respective fluid flush port 152, 162 and a respective connection section 154, 164 in form of a push-in connector 154a, 164a configured to receive and releasably lock a conduit for passing the flush fluid. The connection section 154, 164 of each flush fluid connector 150, 160 may, as indicated by the double arrows, be moved between a flush position FP in which the connection section 154, 164 extends radially beyond the footprint area FA, and a service position SP in which the connection section 154, 164 is radially inside of the footprint area FA. The connection section 154, 164 of each flush fluid connector 150, 160 may be moved between the flush position FP and the service position SP by flexing the flexible hose section 158, 168 in relation to the cartridge housing 102.

The hose section 158, 168 may be resilient. Thus, the hose section 158, 168 may be a flexible and/or resilient section 158, 168.

Now turning to Fig. 6C. Fig. 6C shows a central portion of a seal cartridge 100. The seal cartridge 100 of Fig. 6C is similar to the seal cartridge 100 of Figs. 2-5. Given this, only relevant differences, not already described, will be described in the following. In Fig. 6C, the inlet and an outlet flush fluid connectors 150, 160 are of the same type as in Figs. 2-5 and will not be described any further here. However, in Fig. 6C, the inlet and an outlet flush fluid connectors 150, 160 are located differently as compared to the inlet and an outlet flush fluid connectors 150, 160 of Figs. 2-5. In Fig. 6C, the inlet and an outlet flush fluid connectors 150, 160 are located closer to each other since the fluid flush ports 152, 162 are located closer to each other. Further, the fluid flush ports 152, 162 have different angle in relation to the axial direction AD. In Fig. 6C, the fluid flush ports 152, 162 each extend in a normal direction to the axial direction AD. This means that the connection sections 154, 164 are each swivable between the flush position FP and the service position SP in a different plane P as compared to in the seal cartridge 100 of Figs. 2-5. Like in the seal cartridge 100 of Figs. 2-5, the connection sections 154, 164 are each swivable between the flush position FP and the service position SP in a plane P extending substantially perpendicular to an associated flush fluid port 152, 162. In this way, the connection section 154, 164 of each flush fluid connector 150, 160 may, as indicated by the double arrows, be moved between a flush position FP in which the connection section 154, 164 extends radially beyond the footprint area FA, and a service position SP in which the connection section 154, 164 is radially inside of the footprint area FA.

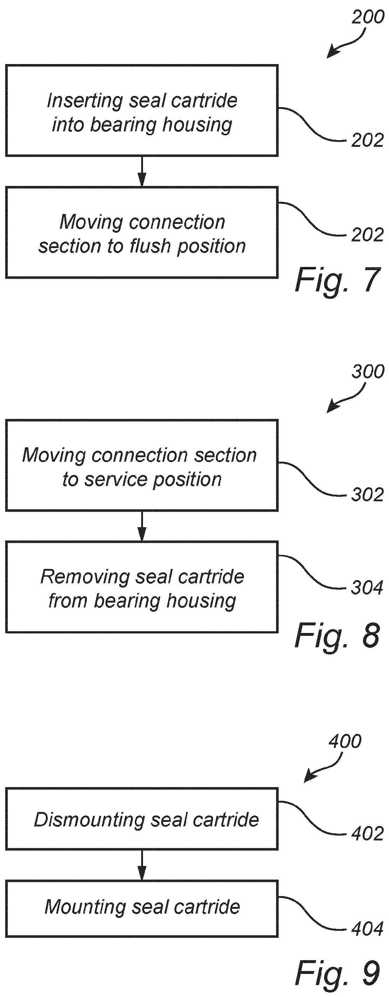

Now turning to Fig. 7. Fig 7 is a flow chart of a method 200 of mounting a seal cartridge 100 of the above described kind in a bearing housing 20 of an agitator system 10. The method 200 comprises inserting 202, while the connection section 154, 164 is in the service position SP, the seal cartridge 100 into the bearing housing 102 along the axial direction AD of the rotary shaft 12, such that the radially outer surface 105 abuts an inwardly facing surface 22 of the bearing housing 20 thereby radially supporting the seal cartridge 100 in the bearing housing 100.

Thus, by having the connection section 154, 164 in the service position SP in which the connection section 154, 164 is radially inside of the footprint area FA, the seal cartridge 100 may be inserted into the bearing housing 102 along the axial direction AD of the rotary shaft 12 without the connection section 154, 156 hindering or affecting the insertion of the seal cartridge into the bearing housing 20.

The method 200 proceeds by moving 204 the connection section 154, 164 from the service position SP to the flush position FP. Thus, by moving the connection section 154, 164 to the flush position FP, the connection section 154, 164 may easily be accessed so as to connect a conduit 70 or similar for passing the flush fluid to the seal cartridge 100.

It is to be noted that only one of the connection sections 154, 164 may have to be movable whereas the other one may be fixed in relation to the cartridge housing 102. In such situation, the fixed connection section is to advantage to be located radially inside the footprint area FA such that the fixed connection section need not be removed from the cartridge housing 102 when the seal cartridge 100 is to be inserted into the bearing housing 20.

Now turning to Fig. 8. Fig 8 is a flow chart of a method 300 of dismounting a seal cartridge 100 of the above described kind being radially supported in a bearing housing 20 of an agitator system 10, by the radially outer surface 105 abutting an inwardly facing surface 22 of the bearing housing 20. The method 300 comprises moving 302 the connection section 154, 164 from the flush position FP to the service position SP.

The method 300 proceeds by removing 304, while the connection section 154, 164 is in the service position SP, the seal cartridge 100 from the bearing housing 20 along the axial direction AD of the rotary shaft 12.

Thus, by having the connection section 154, 164 in the service position SP in which the connection section 154, 164 is radially inside of the footprint area FA, the seal cartridge 100 may be removed from the bearing housing 102 along the axial direction AD of the rotary shaft 12 without the connection section 154, 156 hindering or affecting the removal of the seal cartridge from the bearing housing 20.

It is to be noted that only one of the connection sections 154, 164 may have to be movable whereas the other one may be fixed in relation to the cartridge housing 102. In such situation, the fixed connection section is to advantage to be located radially inside the footprint area FA such that the fixed connection section need not be removed from the cartridge housing 102 when the seal cartridge 100 is to be inserted into the bearing housing 20.

Now turning to Fig. 9. Fig 9 is a flow chart of a method 400 of maintaining an agitator system 10 of the kind described above mainly in conjunction with Figs. 1A and 1B. The method 400 comprises dismounting 402 the seal cartridge 100 using the above described method 300. Thus, the seal cartridge 100 may be removed in order to be serviced or replaced.

The method 400 proceeds by mounting 404 a seal cartridge 100 using the above described method 200. The so mounted seal cartridge 100 may be the dismounted seal cartridge 100 after servicing the dismounted seal cartridge 100, or the so mounted seal cartridge 100 may be a replacement seal cartridge 100 of the above described kind.

Thus, by the method 400, an agitator system 10 of the above described kind may be maintained in a simplified manner where the seal cartridge 100 may be removed from and inserted back into the bearing housing 20 while the connection section 154, 164 is radially inside of the footprint area FA.

It is to be noted that only one of the connection sections 154, 164 may have to be movable whereas the other one may be fixed in relation to the cartridge housing 102. In such situation, the fixed connection section is to advantage to be located radially inside the footprint area FA such that the fixed connection section need not be removed from the cartridge housing 102 when the seal cartridge 100 is to be inserted into the bearing housing 20.

It will be appreciated that the present inventive concept is not limited to the variants and examples shown. Several modifications and variations are thus conceivable within the scope of the invention which thus is defined by the appended claims.

## Claims

1. A seal cartridge (100) for sealing an interface between an opening (52) in a vessel (50) and a rotary shaft (12) of an agitator system (10) extending into the vessel (50) through the opening (52), the seal cartridge (100) comprising:
a cartridge housing (102) configured to be arranged in a bearing housing (20) of the agitator system (10) by being inserted into the bearing housing (20) along an axial direction (AD) of the rotary shaft (12), the cartridge housing (102) comprising a radially outer surface (105) configured to abut an inwardly facing surface (22) of the bearing housing (20) for radially supporting the seal cartridge (100) in the bearing housing (20),
a rotary seal (120) coupled to the cartridge housing (102), and
an inlet and an outlet flush fluid connector (150, 160) fluidly connected to a respective flush fluid port (152, 162) of the seal cartridge housing (102) and configured to pass a flush fluid for flushing an interface between a non-rotary sealing element (122) and a rotary sealing element (124) of the rotary seal (120),
wherein a connection section (154, 164) of one or more of the inlet and outlet flush fluid connector (150, 160) is movable between a flush position (FP) in which the connection section (154, 164) extends radially beyond a footprint area (FA) defined by the radially outer surface (105) as seen along the axial direction (AD) of the rotary shaft (12), and a service position (SP) in which the connection section (154, 164) is radially inside of the footprint area (FA), thereby allowing the seal cartridge (100) to be inserted in the bearing housing (20).

2. The seal cartridge (100) according to claim 1, wherein the connection section (154, 164) is swivable between the flush position (FP) and the service position (SP).

3. The seal cartridge (100) according to claim 1 or 2, wherein the connection section (154, 164) is swivable between the flush position (FP) and the service position (SP) in a plane (P) extending substantially perpendicular to the flush fluid port (152, 162).

4. The seal cartridge (100) according to any one of the preceding claims, wherein the connection section (154, 164) is swivably fluidly connected to a fixed section (156, 166) of the flush fluid connector (150, 160) attached to the flush fluid port (152, 162), such that the connection section is swivable between the flush position and the service position.

5. The seal cartridge (100) according to claim 1, wherein the connection section (154, 164) is fluidly connected to the flush fluid port (152, 162) via a flexible and/or resilient section (158, 168), such that the connection section (154, 164) is movable between the flush position (FP) and the service position (SP).

6. The seal cartridge (100) according to any one of the preceding claims, wherein each flush fluid port (152, 162) has a major component in a tangential direction of the rotary shaft (12).

7. The seal cartridge (100) according to any one of the preceding claims, wherein the connection section (154, 164) comprises a push-in connector (154a, 164a) configured to receive and releasably lock a conduit (70) for passing the flush fluid.

8. The seal cartridge (100) according to any one of the preceding claims, wherein the inlet and the outlet flush fluid connectors (150, 160) are configured to be fluidly connected to a flush space at least partially defined by the non-rotary sealing element (122) and the rotary sealing element (124).

9. The seal cartridge (100) according to any one of the preceding claims, wherein the non-rotary sealing element (122) and the rotary sealing element (124) are each configured to circumscribe the rotary shaft (12), wherein the non-rotary sealing element (122) and the rotary sealing element (124) are configured to seal against each other, wherein the non-rotary sealing element (122) is sealingly coupled to the cartridge housing (102) and the rotary sealing element (124) is configured to be sealingly coupled to the rotary shaft (12).

10. The seal cartridge (100) according to claim 9, wherein the seal cartridge (100) further comprises an inner sleeve (110) rotationally coupled to the cartridge housing (102) via a bearing (112), the inner sleeve (110) being configured to receive the rotary shaft (12) along the axial direction (AD) and to co-rotate with the rotary shaft (12), wherein the rotary sealing element (124) is sealingly coupled to the inner sleeve (110).

11. The seal cartridge (100) according to any one of the preceding claims, wherein the cartridge housing (102) comprises a further radially outer surface (104) provided with one or more outer seals (106) configured to abut and seal against an internal surface portion (56) associated with the vessel (50) defining the opening (52).

12. The seal cartridge (100) according to any one of the preceding claims, wherein the flush fluid comprises one or more of water, steam, a cleaning liquid, an oil, such as mineral oil, air, an inert gas, such as nitrogen, and an alcohol, such as ethanol.

13. An agitator system (10) for mixing a liquid product (2) held in a vessel (50), the agitator system (10) comprising:
a rotary shaft (12) provided with one or more impellers (14) configured to mix the liquid product (2),
a drive unit (11) coupled to the rotary shaft (12) and configured to rotate the rotary shaft (12), and
a seal cartridge (100) according to any one of the preceding claims, arranged in a bearing housing (20), for sealing an interface between an internal surface portion (56) associated with the vessel (50) defining an opening (52) in the vessel (50) for receiving the rotary shaft (12) and the rotary shaft (12).

14. A mixing arrangement (1) for mixing a liquid product (2), the mixing arrangement (1) comprising:
a vessel (50) configured to hold the liquid product (2), and
an agitator system (10) according to claim 13, wherein the rotary shaft (12) extends into the vessel (50) through the opening (52) such that the one or more impellers (14) are located in the vessel (50), and the drive unit (11) is located outside of the vessel (50), wherein the interface between the internal surface portion (56) associated with the vessel (50) and the rotary shaft (12) is sealed by the seal cartridge (100).

15. A method (200) of mounting a seal cartridge (100) according to any one of claims 1-12, in a bearing housing (20) of an agitator system (10), the method (200) comprising:
inserting (202), while the connection section (154, 164) is in the service position (SP), the seal cartridge (100) into the bearing housing (102) along the axial direction (AD) of the rotary shaft (12), such that the radially outer surface (105) abuts an inwardly facing surface (22) of the bearing housing (20) thereby radially supporting the seal cartridge (100) in the bearing housing (100), and
moving (204) the connection section (154, 164) from the service position (SP) to the flush position (FP).

16. A method (300) of dismounting a seal cartridge (100) according to any one of claims 1-12, being radially supported in a bearing housing (20) of an agitator system (10), by the radially outer surface (105) abutting an inwardly facing surface (22) of the bearing housing (20), the method (300) comprising:
moving (302) the connection section (154, 164) from the flush position (FP) to the service position (SP), and
removing (304), while the connection section (154, 164) is in the service position (SP), the seal cartridge (100) from the bearing housing (20) along the axial direction (AD) of the rotary shaft (12).

17. A method (400) of maintaining an agitator system (10) according to claim 13, the method (400) comprising:
dismounting (402) the seal cartridge (100) using the method (300) of claim 16, and
mounting (404) a seal cartridge (100) using the method (200) of claim 15, wherein the mounted seal cartridge (100) is the dismounted seal cartridge (100) after servicing the dismounted seal cartridge (100), or wherein the mounted seal cartridge (100) is a replacement seal cartridge (100) according to any one of claims 1-12.
